# EUROPEAN PATENT APPLICATION

(11) **EP 4 697 280 A1**
(43) Date of publication of application: **18.02.2026**
(21) Application number: 24876080.3
(22) Date of filing: 14.06.2024
(51) Int. Cl.: G06T 17/00

(54) **ACTION REDIRECTION METHOD AND APPARATUS, AND COMPUTING DEVICE CLUSTER**

(30) Priority: 12.10.2023 CN 202311324181
(71) Applicant: Huawei Technologies Co., Ltd., Shenzhen, Guangdong 518129 (CN)
(72) Inventor: HE, Yina, Shenzhen, Guangdong 518129 (CN); SUN, Junxiao, Shenzhen, Guangdong 518129 (CN)
(74) Representative: Eisenführ Speiser
(86) International application number: PCT/CN2024/099145
(87) International publication number: WO 2025/077255

(57) **Abstract**

An action redirection method is provided, and includes: segmenting a target character based on semantics of different parts of the target character, to obtain a plurality of first body segments related to the target character; modeling each first body segment based on a first coordinate system marked on the first body segment, to obtain a plurality of first geometric models, where one first geometric model represents a shape of one body segment; performing collision detection on the plurality of first geometric models; and when first geometric models collide with each other, adjusting a distance between the first geometric models that collide with each other, and adjusting an action sequence of the target character based on an adjusted distance. In this way, a coordinate system is constructed for a body segment of the target character, and a geometric model is output through modeling, so that accurate geometric expressing of the body segment is implemented. This improves quality and efficiency of determining whether clipping exists between the body segments.

## Description

This application claims priority to Chinese Patent Application No. 202311324181.9, filed with the China National Intellectual Property Administration on October 12, 2023 and entitled "ACTION REDIRECTION METHOD, APPARATUS, AND COMPUTING DEVICE CLUSTER", which is incorporated herein by reference in its entirety.

### TECHNICAL FIELD

This application relates to the field of artificial intelligence (artificial intelligence, AI) technologies, and in particular, to an action redirection method, an apparatus, and a computing device cluster.

### BACKGROUND

A metaverse (metaverse) may be understood as a vast virtual space, and may provide a series of functions and services such as gaming and social networking. A digital human is a core carrier of the metaverse. In a process of creating the digital human, one set of actions is often created for one character, and the same actions are applied to a large quantity of different characters. However, due to a body difference, a body part difference, and a clothing difference between a source character and a target character, when actions of the source character are applied to the target character, the target character usually exhibits some actions that do not comply with a physical principle. For example, an arm of the target character clips through a body part of the target character, that is, "clipping" occurs. As a result, action simulation of the target character is unrealistic, affecting user experience.

In a related technology, a clipping action may be redirected in a manual correction manner, so that the redirected action complies with a physical principle. However, such an action redirection method is time-consuming, and real-time performance of action simulation is poor. Therefore, how to implement action redirection while ensuring quality and timeliness is an urgent technical problem to be resolved currently.

### SUMMARY

This application provides an action redirection method, an action semantics transfer method, an apparatus, a computing device cluster, a computer storage medium, and a computer product, to implement action redirection while ensuring quality and timeliness.

According to a first aspect, this application provides an action redirection method, including: segmenting a target character based on semantics of different parts of the target character, to obtain a plurality of first body segments related to the target character; modeling each first body segment based on a first coordinate system marked on the first body segment, to obtain a plurality of first geometric models, where one first geometric model represents a shape of one body segment; performing collision detection on the plurality of first geometric models; and when the first geometric models collide with each other, adjusting a distance between the first geometric models that collide with each other, and adjusting an action sequence of the target character based on an adjusted distance, where the action sequence of the target character is obtained by transferring an action sequence of a source character.

In this case, a local coordinate system is constructed for each body segment of the target character, and the geometric model is output through segment modeling, so that accurate geometric expressing of the body segment is implemented, and whether clipping exists between the body segments can be quickly determined. This improves quality and efficiency of repairing clipping. In addition, because the geometric model can accurately express the shape of the body segment, collision detection and repair based on the geometric model can well resolve a problem of clipping caused by inconsistency between the source character and the target character in terms of a body shape, a height, and the like.

In a possible implementation, modeling each first body segment based on the first coordinate system marked on the first body segment includes: determining, based on the first coordinate system marked on the first body segment, a coordinate expression of a point on a surface of the first body segment in the first coordinate system, and training a to-be-trained model based on the coordinate expression, to obtain the first geometric model. In this way, the geometric model may be obtained through modeling based on a location, a direction, and the like of the point on the surface of the body segment in the coordinate system.

In a possible implementation, performing collision detection on the plurality of first geometric models includes: for any two first geometric models, determining a minimum distance between the 1^{st} geometric model and the 2^{nd} geometric model, where the minimum distance is a distance between a first point inside the 1^{st} geometric model and a second point inside the 2^{nd} geometric model; inputting at least a part of a coordinate expression of the first point in a coordinate system associated with the 2^{nd} geometric model into the 2^{nd} geometric model, to obtain a first distance, and inputting at least a part of a coordinate expression of the second point in a coordinate system associated with the 1^{st} geometric model into the 1^{st} geometric model, to obtain a second distance; and when a sum of the first distance and the second distance is greater than the minimum distance, determining that the 1^{st} geometric model collides with the 2^{nd} geometric model. In this way, whether the geometric models collide with each other can be detected based on the minimum distance between the geometric models.

In a possible implementation, before performing collision detection on the plurality of first geometric models, the method further includes: segmenting the source character based on semantics of different parts of the source character, to obtain a plurality of second body segments related to the source character; modeling, based on the first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment; determining a location relationship between a second body part of the target character and each first body segment based on the plurality of mapping models and a location relationship between a first body part of the source character and each second body segment, where the first body part is the same as the second body part; determining a final location of the second body part in a world coordinate system based on the location relationship between the second body part of the target character and each first body segment; and adjusting the action sequence of the target character based on the final location, so that the second body part is located at the final location. In this way, semantics of a body part action of the source character can be accurately and quickly transferred to the target character by constructing the mapping model between the source character and the target character.

In a possible implementation, both the first coordinate system and the second coordinate system are cylindrical coordinate systems.

A first location relationship between the first body part and the second body segment includes: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part.

In this case, determining the location relationship between the second body part of the target character and each first body segment based on the plurality of mapping models and the location relationship between the first body part of the source character and each second body segment includes: inputting the first location into a mapping model related to the first location relationship, to obtain a second location of a second projection point that is of the second body part and that is on a central axis of the second coordinate system; and inputting the second location, the first direction relationship, and the second direction relationship into a first geometric model of a first body segment related to the first location relationship, to obtain a second distance between the second projection point and the second body part, where when the first distance is less than or equal to the second distance, a second location relationship between the second body part and the first body segment related to the first location relationship includes the second location, the first direction relationship, the second direction relationship, and the second distance; or when the first distance is greater than the second distance, a second location relationship includes the second location, the first direction relationship, the second direction relationship, and the first distance. In this way, the second location relationship between the second body part and the first body segment related to the first location relationship can be calculated based on the mapping model.

In a possible implementation, both the first coordinate system and the second coordinate system are cylindrical coordinate systems.

A first location relationship between the first body part and the second body segment includes: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part.

In this case, determining the location relationship between the second body part of the target character and each first body segment based on the plurality of mapping models and the location relationship between the first body part of the source character and each second body segment includes: inputting the first location into a mapping model related to the first location relationship, to obtain a second location of a second projection point that is of the second body part and that is on a central axis of the second coordinate system; inputting the second location, the first direction relationship, and the second direction relationship into a first geometric model of a first body segment related to the first location relationship, to obtain a second distance between the second projection point and the second body part; inputting the first location, the first direction relationship, and the second direction relationship into a second geometric model of the second body segment related to the first location relationship, to obtain a third distance between the first projection point and the first body part, where the second geometric model is obtained through modeling based on a coordinate system marked on the second body segment related to the first location relationship; and obtaining a fourth distance based on the first distance, the second distance, and the third distance, where a second location relationship between the second body part and the first body segment related to the first location relationship includes the second location, the first direction relationship, the second direction relationship, and the fourth distance. In this way, the second location relationship between the second body part and the first body segment related to the first location relationship can be calculated based on the mapping model and the geometric model of the body segment of the source character.

In a possible implementation, both the first coordinate system and the second coordinate system are spherical coordinate systems.

A first location relationship between the first body part and the second body segment includes: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system.

In this case, determining the location relationship between the second body part of the target character and each first body segment based on the plurality of mapping models and the location relationship between the first body part of the source character and each second body segment includes: inputting the first relationship into a mapping model related to the first location relationship, to obtain a fourth relationship between a direction from the second body part to the origin of the first coordinate system and a direction of a z axis of the second coordinate system; and inputting the fourth relationship, the second relationship, and the third relationship into a first geometric model of a first body segment related to the first location relationship, to obtain a second distance between the second body part and an origin of the second coordinate system, where when the first distance is less than or equal to the second distance, a second location relationship between the second body part and the first body segment related to the first location relationship includes the fourth relationship, the second relationship, the third relationship, and the second distance; or when the first distance is greater than the second distance, a second location relationship includes the fourth relationship, the second relationship, the third relationship, and the first distance.

In a possible implementation, both the first coordinate system and the second coordinate system are spherical coordinate systems.

A first location relationship between the first body part and the second body segment includes: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system.

In this case, determining the location relationship between the second body part of the target character and each first body segment based on the plurality of mapping models and the location relationship between the first body part of the source character and each second body segment includes: inputting the first relationship into a mapping model related to the first location relationship, to obtain a fourth relationship between a direction from the second body part to the origin of the first coordinate system and a direction of a z axis of the second coordinate system; inputting the fourth relationship, the second relationship, and the third relationship into a first geometric model of a first body segment related to the first location relationship, to obtain a second distance between the second body part and an origin of the second coordinate system; inputting the first relationship, the second relationship, and the third relationship into a second geometric model of the second body segment related to the first location relationship, to obtain a third distance between the first body part and the origin of the first coordinate system, where the second geometric model is obtained through modeling based on a coordinate system marked on the second body segment related to the first location relationship; and obtaining a fourth distance based on the first distance, the second distance, and the third distance, where a second location relationship between the second body part and the first body segment related to the first location relationship includes the fourth relationship, the second relationship, the third relationship, and the fourth distance.

In a possible implementation, the first body segment is associated with a first part of the target character, and the second body segment is associated with a second part of the source character. When the first part is the same as the second part, a type of the coordinate system marked on the first body segment is the same as a type of the coordinate system marked on the second body segment, and a type of the first key point marked on the first body segment is the same as a type of the second key point marked on the second body segment. In this way, the same coordinate systems and key points are marked on the source character and the target character, so that the subsequently constructed mapping model can better reflect the mapping relationship between the source character and the target character, thereby improving action semantics transfer accuracy.

In a possible implementation, the first coordinate system is a cylindrical coordinate system or a spherical coordinate system.

According to a second aspect, this application provides an action semantics transfer method, including: segmenting a target character based on semantics of different parts of the target character, to obtain a plurality of first body segments related to the target character; segmenting a source character based on semantics of different parts of the source character, to obtain a plurality of second body segments related to the source character; modeling, based on first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment; determining a location relationship between a second body part of the target character and each first body segment based on the plurality of mapping models and a location relationship between a first body part of the source character and each second body segment, where the first body part is the same as the second body part; determining a final location of the second body part in a world coordinate system based on the location relationship between the second body part of the target character and each first body segment; and adjusting an action sequence of the target character based on the final location, so that the second body part is located at the final location, where the action sequence of the target character is obtained by transferring an action sequence of the source character. In this way, semantics of a body part action of the source character can be accurately and quickly transferred to the target character by constructing the mapping model between the source character and the target character.

According to a third aspect, this application provides an action redirection apparatus, including a segmentation module, a modeling module, and a processing module. The segmentation module is configured to segment a target character based on semantics of different parts of the target character, to obtain a plurality of first body segments related to the target character. The modeling module is configured to model each first body segment based on a first coordinate system marked on the first body segment, to obtain a plurality of first geometric models, where one first geometric model represents a shape of one body segment. The processing module is configured to: perform collision detection on the plurality of first geometric models, when the first geometric models collide with each other, adjust a distance between the first geometric models that collide with each other, and adjust an action sequence of the target character based on an adjusted distance, where the action sequence of the target character is obtained by transferring an action sequence of a source character.

In a possible implementation, when modeling each first body segment based on the first coordinate system marked on the first body segment, the modeling module is specifically configured to: determine, based on the first coordinate system marked on the first body segment, a coordinate expression of a point on a surface of the first body segment in the first coordinate system, and train a to-be-trained model based on the coordinate expression, to obtain the first geometric model.

In a possible implementation, when performing collision detection on the plurality of first geometric models, the processing module is specifically configured to: for any two first geometric models, determine a minimum distance between the 1^{st} geometric model and the 2^{nd} geometric model, where the minimum distance is a distance between a first point inside the 1^{st} geometric model and a second point inside the 2^{nd} geometric model; input at least a part of a coordinate expression of the first point in a coordinate system associated with the 2^{nd} geometric model into the 2^{nd} geometric model, to obtain a first distance, and input at least a part of a coordinate expression of the second point in a coordinate system associated with the 1^{st} geometric model into the 1^{st} geometric model, to obtain a second distance; and when a sum of the first distance and the second distance is greater than the minimum distance, determine that the 1^{st} geometric model collides with the 2^{nd} geometric model.

In a possible implementation, before the processing module performs collision detection on the plurality of first geometric models, the segmentation module is further configured to segment the source character based on semantics of different parts of the source character, to obtain a plurality of second body segments related to the source character; the modeling module is further configured to model, based on the first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment; the processing module is further configured to determine a location relationship between a second body part of the target character and each first body segment based on the plurality of mapping models and a location relationship between a first body part of the source character and each second body segment, where the first body part is the same as the second body part; the processing module is further configured to determine a final location of the second body part in a world coordinate system based on the location relationship between the second body part of the target character and each first body segment; and the processing module is further configured to adjust the action sequence of the target character based on the final location, so that the second body part is located at the final location.

In a possible implementation, both the first coordinate system and the second coordinate system are cylindrical coordinate systems.

A first location relationship between the first body part and the second body segment includes: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part.

In this case, when determining the location relationship between the second body part of the target character and each first body segment based on the plurality of mapping models and the location relationship between the first body part of the source character and each second body segment, the processing module is specifically configured to: input the first location into a mapping model related to the first location relationship, to obtain a second location of a second projection point that is of the second body part and that is on a central axis of the second coordinate system; input the second location, the first direction relationship, and the second direction relationship into a first geometric model of a first body segment related to the first location relationship, to obtain a second distance between the second projection point and the second body part; input the first location, the first direction relationship, and the second direction relationship into a second geometric model of the second body segment related to the first location relationship, to obtain a third distance between the first projection point and the first body part, where the second geometric model is obtained through modeling based on a coordinate system marked on the second body segment related to the first location relationship; and obtain a fourth distance based on the first distance, the second distance, and the third distance, where a second location relationship between the second body part and the first body segment related to the first location relationship includes the second location, the first direction relationship, the second direction relationship, and the fourth distance.

In a possible implementation, both the first coordinate system and the second coordinate system are spherical coordinate systems.

A first location relationship between the first body part and the second body segment includes: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system.

In this case, when determining the location relationship between the second body part of the target character and each first body segment based on the plurality of mapping models and the location relationship between the first body part of the source character and each second body segment, the processing module is specifically configured to: input the first relationship into a mapping model related to the first location relationship, to obtain a fourth relationship between a direction from the second body part to the origin of the first coordinate system and a direction of a z axis of the second coordinate system; input the fourth relationship, the second relationship, and the third relationship into a first geometric model of a first body segment related to the first location relationship, to obtain a second distance between the second body part and an origin of the second coordinate system; input the first relationship, the second relationship, and the third relationship into a second geometric model of the second body segment related to the first location relationship, to obtain a third distance between the first body part and the origin of the first coordinate system, where the second geometric model is obtained through modeling based on a coordinate system marked on the second body segment related to the first location relationship; and obtain a fourth distance based on the first distance, the second distance, and the third distance, where a second location relationship between the second body part and the first body segment related to the first location relationship includes the fourth relationship, the second relationship, the third relationship, and the fourth distance.

In a possible implementation, the first body segment is associated with a first part of the target character, and the second body segment is associated with a second part of the source character. When the first part is the same as the second part, a type of the coordinate system marked on the first body segment is the same as a type of the coordinate system marked on the second body segment, and a type of the first key point marked on the first body segment is the same as a type of the second key point marked on the second body segment.

According to a fourth aspect, this application provides an action semantics transfer apparatus, including a segmentation module, a modeling module, and a processing module. The segmentation module is configured to: segment a target character based on semantics of different parts of the target character, to obtain a plurality of first body segments related to the target character; and segment a source character based on semantics of different parts of the source character, to obtain a plurality of second body segments related to the source character. The modeling module is configured to model, based on first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment. The processing module is configured to determine a location relationship between a second body part of the target character and each first body segment based on the plurality of mapping models and a location relationship between a first body part of the source character and each second body segment, where the first body part is the same as the second body part. The processing module is further configured to: determine a final location of the second body part in a world coordinate system based on the location relationship between the second body part of the target character and each first body segment, and adjust an action sequence of the target character based on the final location, so that the second body part is located at the final location, where the action sequence of the target character is obtained by transferring an action sequence of the source character.

According to a fifth aspect, this application provides a computing device cluster, including at least one computing device. Each computing device includes a processor and a memory. The processor of the at least one computing device is configured to execute instructions stored in the memory of the at least one computing device, so that the computing device cluster performs the method described in any one of the first aspect or the possible implementations of the first aspect, or performs the method described in the second aspect.

According to a sixth aspect, this application provides a computer-readable storage medium. The computer-readable storage medium stores a computer program. When the computer program is run on a computing device cluster including at least one computing device, the computing device cluster is caused to perform the method described in any one of the first aspect or the possible implementations of the first aspect, or perform the method described in the second aspect.

According to a seventh aspect, this application provides a computer program product. When the computer program product runs on a computing device cluster including at least one computing device, the computing device cluster is caused to perform the method described in any one of the first aspect or the possible implementations of the first aspect, or perform the method described in the second aspect.

It may be understood that, for beneficial effect of the third aspect to the seventh aspect, refer to related descriptions in the first aspect and the second aspect. Details are not described herein again.

### BRIEF DESCRIPTION OF DRAWINGS

FIG. 1 is a schematic flowchart of an action redirection method according to an embodiment of this application;
FIG. 2 is a diagram of marking a coordinate system on a body segment according to an embodiment of this application;
FIG. 3 is a schematic flowchart of an action semantics transfer method according to an embodiment of this application;
FIG. 4 is a diagram of a structure of an action redirection apparatus according to an embodiment of this application;
FIG. 5 is a diagram of a structure of an action semantics transfer apparatus according to an embodiment of this application;
FIG. 6 is a diagram of a structure of a computing device according to an embodiment of this application; and
FIG. 7 is a diagram of a structure of a computing device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification represents an "or" relationship between the associated objects. For example, A/B represents A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

First, some technical terms in this application are described.

### (1) Digital human

A digital human (digital human) is a composite product that exists in a non-physical world, is created and used via a computer, and has multiple human features (such as an appearance feature, a human performance capability, and a human interaction capability). The digital human may be produced by using a computer graphics (computer graphics, CG) technology and an AI technology.

The following describes the technical solutions provided in this application.

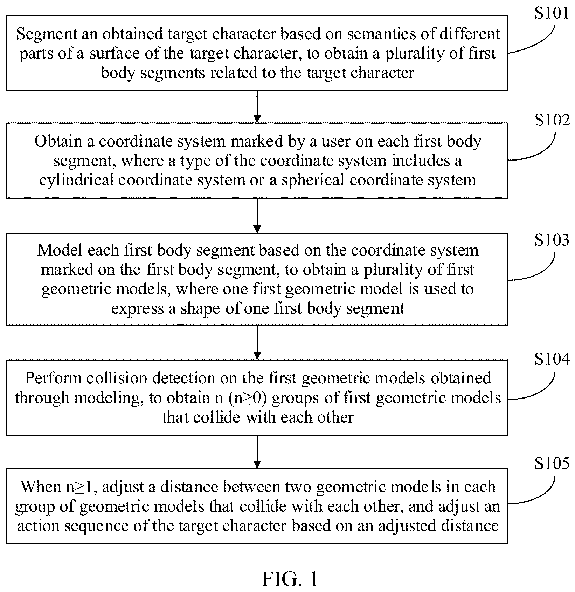

For example, FIG. 1 is a schematic flowchart of an action redirection method according to an embodiment of this application. It may be understood that the method may be performed by any apparatus, device, platform, or device cluster that has computing and processing capabilities. As shown in FIG. 1, the action redirection method may include the following steps.

S101: Segment an obtained target character based on semantics of different parts of the target character, to obtain a plurality of first body segments related to the target character.

In this embodiment, the target character may be a character uploaded by a user, or may be a character generated by a device like a computer. This may be specifically determined based on an actual situation, and is not limited herein. In some embodiments, the target character may be but is not limited to a digital human.

After the target character is obtained, the target character may be segmented based on the semantics of the different parts of the target character, to obtain the plurality of first body segments related to the target character. For example, during segmentation, a head, a trunk, palms, soles of feet, upper arms of upper limbs, forearms of the upper limbs, thighs of lower limbs, and shanks of the lower limbs of the target character may be separately segmented, to obtain the plurality of first body segments related to the target character. For example, the target character may be segmented in a skinning weight segmentation manner. Certainly, the target character may alternatively be segmented in a manual segmentation manner.

S102: Obtain a coordinate system marked by the user on each first body segment, where a type of the coordinate system includes a cylindrical coordinate system or a spherical coordinate system.

In this embodiment, the first body segments obtained through segmentation may be presented to the user, so that the user constructs and marks coordinate systems on these body segments. For example, a type of the coordinate system marked by the user may include a cylindrical coordinate system or a spherical coordinate system. When the user marks the coordinate system on the body segment, the following conditions need to be met: (1) A geometric body (for example, a cylinder or a sphere) represented by the coordinate system can completely cover the body segment. (2) A volume of the geometric body represented by the coordinate system is as small as possible. (3) When the geometric body represented by the coordinate system is a cylinder, a central axis of the cylinder needs to be close to a direction of a skeleton in the body segment.

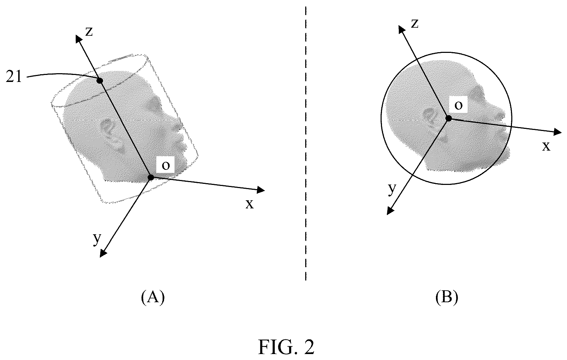

For example, when a cylindrical coordinate system is marked on a body segment, the user may mark, on the body segment, an origin of the coordinate system (a point on a bottom surface of the body segment, which is usually a center of a circle that can be formed by a bottom cross section of the body segment), an end point of a central axis of a cylinder represented by the coordinate system (a point on another bottom surface of the body segment, which is usually a center of a circle that can be formed by another bottom cross section of the body segment), a direction of the central axis, and a direction perpendicular to the direction of the central axis. For example, a coordinate system is marked on the head. As shown in (A) in FIG. 2, an origin o of the coordinate system may be marked first, an end point 21 of a central axis is marked, and then, a direction of a z axis in the coordinate system and a direction of an x axis or a y-axis perpendicular to the z axis are marked (a direction of one unmarked axis may be automatically marked, or may be manually marked certainly). In this way, the cylindrical coordinate system may be marked on the head. When a spherical coordinate system is marked on a body segment, the user may mark an origin of the coordinate system (a point inside the body segment, which is usually a center of a circle that can be formed by a middle cross section of the body segment) and directions of any two or three of an x axis, a y axis and a z axis of the coordinate system on the body segment. For example, still refer to FIG. 2. As shown in (B) in FIG. 2, an origin o of a coordinate system may be marked first, and directions of an x axis, a y axis, and a z axis of the coordinate system are marked. In this way, the spherical coordinate system may be marked on the head. For a process of marking a coordinate system on another body segment, refer to the process of marking the coordinate system on the head described in FIG. 2. Details are not described herein again.

S103: Model each first body segment based on the coordinate system marked on the first body segment, to obtain a plurality of first geometric models, where one first geometric model represents a shape of one first body segment.

In this embodiment, for any first body segment, training data required for modeling may be first prepared. The training data is a coordinate expression of each point on a surface of the first body segment in the coordinate system corresponding to the first body segment. For example, when the first body segment is marked with a cylindrical coordinate system, for any point "point p" on the first body segment, it is assumed that a projection point of the point p on a central axis of the cylindrical coordinate system is a point q. In this case, a coordinate expression of the point p in the cylindrical coordinate system is v=[h, α, β, L], where h indicates a location of the point q on the central axis, α indicates a direction relationship between a direction from the point q to the point p and an axis except for the central axis, β indicates a direction relationship between the direction from the point q to the point p and another axis except for the central axis, and L indicates a distance between the point q and the point p. When the first body segment is marked with a spherical coordinate system, for any point "point p" on the first body segment, a coordinate expression of the point p in the spherical coordinate system is v=[γ, δ, ε, L], where y indicates a relationship between a direction from a circle center to the point p and a direction of a z axis, δ indicates a relationship between the direction from the circle center to the point p and a direction of an x axis, ε indicates a relationship between the direction from the circle center to the point p and a direction of a y axis, and L indicates a distance between the circle center and the point p.

After the training data is obtained, the distance L in the coordinate expression of each coordinate point may be used as a label, and other data is used as a sample, to form paired data. Then, a to-be-trained model may be trained by using a supervised learning method, to obtain one first geometric model. A shape expressed by the first geometric model may be a geometric approximation body having a standard geometric (for example, a cylinder or a sphere) feature.

It should be understood that, for any point s in space, when it is necessary to learn whether the point s is located inside or outside a first body segment, the point s may be first converted into a coordinate expression v in a coordinate system associated with the first body segment. Then, data except for the distance L in the coordinate expression v is input into a first geometric model that can express a shape of the first body segment, to obtain a distance r. When the coordinate system marked on the first body segment is a cylindrical coordinate system, the distance r represents a distance between the point s and a projection point of the point s on a central axis of the cylindrical coordinate system. When the coordinate system is a spherical coordinate system, the distance r represents a distance from the point s to a center of the spherical coordinate system. If the distance r is greater than L, it indicates that the point s is located outside the first body segment. If the distance r is equal to L, it indicates that the point s is located on the first body segment. If the distance r is less than L, it indicates that the point s is located inside the first body segment.

S104: Perform collision detection on the first geometric models obtained through modeling, to obtain n groups (n≥0) of first geometric models that collide with each other.

In this embodiment, for any two geometric models A and B, a distance *R_{ab}* between the two geometric models and closest points *a* and *b* may be first calculated. When the two geometric models are both cylindrical approximation bodies, the distance *R_{ab}* is a distance between central axes of the two geometric models, and the points *a* and b are points on the central axes of the two geometric models A and B respectively. When one geometric model is a cylindrical approximation body and the other geometric model is a spherical approximation body, the distance *R_{ab}* is a distance between a circle center of the spherical approximation body and a central axis of the cylindrical approximation body, and the points *a* and *b* are the circle center of the spherical approximation body and a point on the central axis of the cylindrical geometric model respectively. When the two geometric models A and B are both spherical approximation bodies, the distance *R_{ab}* is a distance between circle centers of the two geometric models, and the points *a* and *b* are circle centers of the two geometric models respectively. For example, the distance *R_{ab}* may be understood as a minimum distance between two geometric models. The points *a* and *b* may be understood as points inside the geometric models.

Then, a distance *Rₐ* between the point *a* related to the geometric model A and the geometric model B is calculated. During calculation, the point *a* may be first converted into a coordinate expression in a coordinate system associated with the geometric model B, and then, data except for a distance in the coordinate expression is input into the geometric model B, to obtain the distance *Rₐ*. In addition, a distance *R_{b}* between a point b related to the geometric model B and the geometric model A may be calculated.

Finally, a value of *Rₐ+R_{b}* may be compared with a value of *R_{ab}.* When *Rₐ+R_{B}≤R_{aB},* it indicates that a distance between the geometric model A and the geometric model B is long, and the geometric model A and the geometric model B do not collide with each other. That is, clipping does not occur between the geometric model A and the geometric model B. When *Rₐ+R_{B}>R_{aB},* it indicates that a distance between the geometric model A and the geometric model B is short, and the geometric model A and the geometric model B collide with each other. That is, clipping occurs between the geometric model A and the geometric model B.

S105: When n≥1, adjust a distance between two geometric models in each group of geometric models that collide with each other, and adjust an action sequence of the target character based on an adjusted distance.

In this embodiment, when n≥1, it indicates that there are geometric models between which clipping occurs. In this case, clipping repair may be performed on the geometric models between which clipping occurs. Specifically, for any group of geometric models A and B that collide with each other, one of the geometric models may be moved, so that a distance *R_{ab}* between the geometric models is greater than or equal to *Rₐ+R_{b}.* For *R_{ab}, Rₐ,* and *R_{b}*, refer to the description in S104. After the distance between the two geometric models is adjusted, the action sequence of the target character can be adjusted based on an adjusted distance and inverse kinematics (Inverse kinematics, IK), so that body segments of the target character can be moved based on the foregoing location adjustment. For example, the action sequence of the target character may be but is not limited to being transferred from an action sequence of a skeleton of a source character to a skeleton of the target character based on an association relationship between the skeleton of the source character and the skeleton of the target character.

Therefore, a local coordinate system is constructed for each body segment of the target character, and the geometric model is output through segment modeling, so that accurate geometric expressing of the body segment is implemented, and whether clipping exists between the body segments can be quickly determined. This improves quality and efficiency of repairing clipping. In addition, because the geometric model can accurately express the shape of the body segment, collision detection and repair based on the geometric model can well resolve a problem of clipping caused by inconsistency between the source character and the target character in terms of a body shape, a height, and the like.

In some embodiments, when an action of the source character is transferred to the target character, semantics of the action of the source character is often lost. As a result, the target character presents some incorrect actions. In view of this, an embodiment of this application further provides an action semantics transfer method, to accurately and quickly transfer the semantics of the action of the source character to the target character.

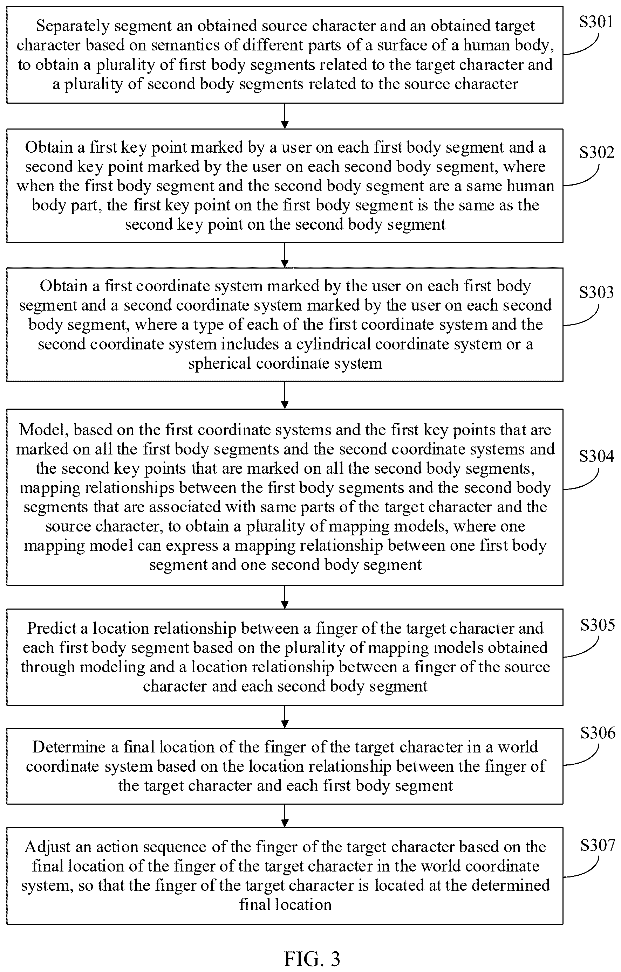

For example, FIG. 3 is a schematic flowchart of an action semantics transfer method according to an embodiment of this application. As shown in FIG. 3, the action semantics transfer method may include the following steps.

S301: Segment an obtained target character based on semantics of different parts of the target character, to obtain a plurality of first body segments related to the target character; and segment an obtained source character based on semantics of different parts of the source character, to obtain a plurality of second body segments related to the source character. For details about a segmentation manner, refer to the description in S101. Details are not described herein again. In addition, the source character may be a character uploaded by a user, may be a character generated by a device like a computer, may be a character collected by an image capture apparatus like a camera, or the like. This may be specifically determined based on an actual situation, and is not limited herein.

S302: Obtain a first key point marked by the user on each first body segment and a second key point marked by the user on each second body segment, where when the first body segment and the second body segment are a same human body part, the first key point on the first body segment is the same as the second key point on the second body segment.

In this embodiment, after the body segments are obtained through segmentation, the body segments obtained through segmentation may be presented to the user, so that the user marks the key points on the body segments. The user may mark the first key point on each first body segment, and mark the second key point on each second body segment. A quantity of first key points and a quantity of second key points may be determined based on an actual situation, and are not limited herein. For example, each of the first key point and the second key point may be understood as a point that is sensitive to semantics of an action on a surface of the body segment, for example, an eye or a nose. When the key point is an eye, a direction, a height, or the like in which a finger points to the eye affects semantics of an action that the finger points to the eye. In this embodiment, when the first body segment and the second body segment are the same human body part, the first key point on the first body segment is the same as the second key point on the second body segment. For example, when the first body segment is a head of the target character, and the second body segment is a head of the source character, if the first key point is an eye and a nose, the second key point is also the eye and the nose.

S303: Obtain a first coordinate system marked by the user on each first body segment and a second coordinate system marked by the user on each second body segment, where a type of each of the first coordinate system and the second coordinate system includes a cylindrical coordinate system or a spherical coordinate system. For details about a marking process, refer to the description in S102. Details are not described herein again. In addition, when the first body segment and the second body segment are a same human body part, the type of the first coordinate system marked on the first body segment is the same as the type of the second coordinate system marked on the second body segment.

S304: Model, based on the first coordinate systems and the first key points that are marked on all the first body segments and the second coordinate systems and the second key points that are marked on all the second body segments, mapping relationships between the first body segments and the second body segments that are associated with same parts of the target character and the source character, to obtain a plurality of mapping models, where one mapping model can express a mapping relationship between one first body segment and one second body segment.

In this embodiment, for a first body segment and a second body segment that are associated with any part and that are of the target character and the source character, the first key point on the first body segment may be converted into a coordinate expression v1 in a first coordinate system corresponding to the first body segment on the target character, and the second key point on the second body segment may be converted into a coordinate expression v2 in a second coordinate system corresponding to the second body segment of the source character. For a conversion process, refer to the description in S103. Details are not described herein again.

When coordinate systems marked on the first body segment and the second body segment are cylindrical coordinate systems, a location, on the central axis, of a projection point of the first key point in the coordinate expression v1 on the central axis may be used as a label, and a location, on the central axis, of a projection point of the second key point in the coordinate expression v2 on the central axis may be used as a sample. Then, a to-be-trained model is trained based on the constructed sample and label by using a supervised learning method, to obtain a mapping model capable of representing a mapping relationship between the first body segment and the second body segment that are associated with the any part.

When coordinate systems marked on the first body segment and the second body segment are spherical coordinate systems, a relationship that is between a direction from a circle center to the first key point and a direction of a z axis and that is in the coordinate expression v1 may be used as a label, and a relationship that is between a direction from a circle center to the second key point and a direction of a z axis and that is in the coordinate expression v2 may be used as a sample. Then, a to-be-trained model is trained based on the constructed sample and label by using a supervised learning method, to obtain a mapping model capable of representing a mapping relationship between the first body segment and the second body segment that are associated with the any part.

S305: Predict a location relationship between a finger of the target character and each first body segment based on the plurality of mapping models obtained through modeling and a location relationship between a finger of the source character and each second body segment.

In this embodiment, an action sequence of the source character may be calculated based on forward kinematics (forward kinematics, FK), to calculate a location of the finger of the source character in a world coordinate system and locations and orientations of the second body segments related to the source character in the world coordinate system. Then, a coordinate expression of the finger in a coordinate system of each second body segment may be calculated through coordinate conversion, where one calculated coordinate expression is a location relationship between the finger and one second body segment.

After the location relationship between the finger of the source character and each second body segment is obtained, the location relationship between the finger of the target character and each first body segment may be predicted based on the location relationship.

When a coordinate system corresponding to a second body segment is a cylindrical coordinate system, a location relationship between the finger of the source character and the second body segment is: v1=[h1, α1, β1, L1], where h1 indicates a location of a projection point of the finger on a central axis, α1 indicates a direction relationship between a direction from the projection point of the finger to the finger and an axis except for the central axis, β1 indicates a direction relationship between the direction from the projection point of the finger to the finger and another axis except for the central axis, and L1 indicates a distance between the projection point of the finger and the finger. In this case, h1 may be input into a mapping model associated with the second body segment, to obtain a location h2 of a projection point of the finger of the target character on the central axis. Then, h2, α1, and β1 are input into a geometric model corresponding to a first body segment of the target character, to obtain a distance r2 between the finger and a projection point of the first body segment on the central axis of the cylindrical coordinate system. Then, a value relationship between r2 and L1 may be determined, and a location relationship between the finger of the target character and the first body segment is obtained based on a determining result. When r2<L1, it indicates that the finger of the target character is excessively close to the first body segment. In this case, clipping easily occurs. To avoid clipping, r2 may be discarded, and L1 is used. In this way, the obtained location relationship between the finger of the target character and the first body segment is: v2=[h2, α1, β1, L1]. When r2≥L1, the location relationship between the finger of the target character and the first body segment is: v2=[h2, α1, β1, r2].

When a coordinate system corresponding to a second body segment is a spherical coordinate system, a location relationship between the finger of the source character and the second body segment is: v1=[γ1, δ1, ε1, L1], where γ1 indicates a relationship between a direction from a circle center to the finger and a direction of a z axis, δ1 indicates a relationship between the direction from the circle center to the finger and a direction of an x axis, ε1 indicates a relationship between the direction from the circle center to the finger and a direction of a y axis, and L1 indicates a distance between the circle center and the finger. In this case, γ1 may be input into a mapping model associated with the second body segment, to obtain a relationship γ2 between a direction of the finger of the target character and the direction of the z axis. Then, y2, δ1, and ε1 are input into a geometric model corresponding to this body segment of the target character, to obtain a distance r2 between the circle center and the finger. Then, a value relationship between r2 and L1 may be determined, and a location relationship between the finger of the target character and the first body segment is obtained based on a determining result. When r2<L1, it indicates that the finger of the target character is excessively close to the first body segment. To avoid this case, r2 may be discarded, and L1 is used. In this way, the obtained location relationship between the finger of the target character and the first body segment is: v2=[h2, α1, β1, L1]. When r2≥L1, the location relationship between the finger of the target character and the first body segment is: v2=[γ2, δ1, ε1, r2].

In some embodiments, the source character and the target character are usually inconsistent in terms of a body shape, a height, and the like, and this easily results in a deviation of the calculated location relationship between the finger of the target character and the first body segment. To eliminate the deviation, after the coordinate systems are marked on the second body segments of the source character, the second body segments may be separately modeled in the modeling manner in S103, to obtain a plurality of second geometric models, where one second geometric model is used to express a shape of one second body segment.

Then, when the location relationship between the finger of the target character and the first body segment is predicted, if the coordinate system corresponding to the second body segment is a cylindrical coordinate system, h1, α1, and β1 may be input into a second geometric model corresponding to the second body segment of the source character, to obtain a distance r1 between the finger and a projection point of the finger on a central axis of the cylindrical coordinate system. Then, on the target character, the calculated distance between the projection point of the finger and the finger may be L2=r2*L1/r1. Finally, the obtained location relationship between the finger of the target character and the first body segment is: v2=[h2, α1, β1, L2].

When the location relationship between the finger of the target character and the first body segment is predicted, if the coordinate system corresponding to the second body segment is a spherical coordinate system, γ1, δ1, and ε1 may be input into a second geometric model corresponding to the second body segment of the source character, to obtain a distance r1 between a circle center and the finger. Then, on the target character, the calculated distance between the circle center and the finger may be L2=r2*Ll/rl. Finally, the obtained location relationship between the finger of the target character and the first body segment is: v2=[γ2, δ1, ε1, L2].

After the location relationship between the finger of the target character and each first body segment is predicted, S306 may be performed.

S306: Determine a final location of the finger of the target character in a world coordinate system based on the location relationship between the finger of the target character and each first body segment.

In this embodiment, the predicted location relationships between the finger of the target character and all first body segments may be first filtered, to eliminate an unimportant location relationship, so as to obtain a location relationship between the finger of the target character and at least one first body segment. For example, when the finger is at a chest location, the finger has no relationship with body segments such as a head, an arm, and a leg. Therefore, these location relationships may be eliminated, and only a location relationship between the finger and the body segment like the chest. Then, the selected location relationship may be converted into a coordinate expression in the world coordinate system, to obtain the final location of the finger of the target character in the world coordinate system. When there are a plurality of location relationships obtained through filtering, average calculation, weighted average, or the like is performed on coordinate expressions of these location relationships in the world coordinate system, to obtain the final location of the finger of the target character in the world coordinate system.

S307: Adjust an action sequence of the target character based on the final location of the finger of the target character in the world coordinate system, so that the finger of the target character is located at the determined final location.

In this embodiment, the action sequence of the target character may be adjusted based on the determined final location and the IK, so that the finger of the target character is located at the determined final location.

In this way, semantics of a finger action of the source character can be accurately and quickly transferred to the target character. It should be understood that the finger described in FIG. 3 may alternatively be replaced with another body part, and this may be specifically determined based on an actual situation, and is not limited herein.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein. In addition, all or a part of any features of any embodiment can be freely and randomly combined in a case of no conflict. A combined technical solution also falls within the scope of this application.

The foregoing is related descriptions of the action redirection method and the action semantics transfer method provided in embodiments of this application. Next, according to the methods in the foregoing embodiments, embodiments of this application further provide an action redirection apparatus and an action semantics transfer apparatus.

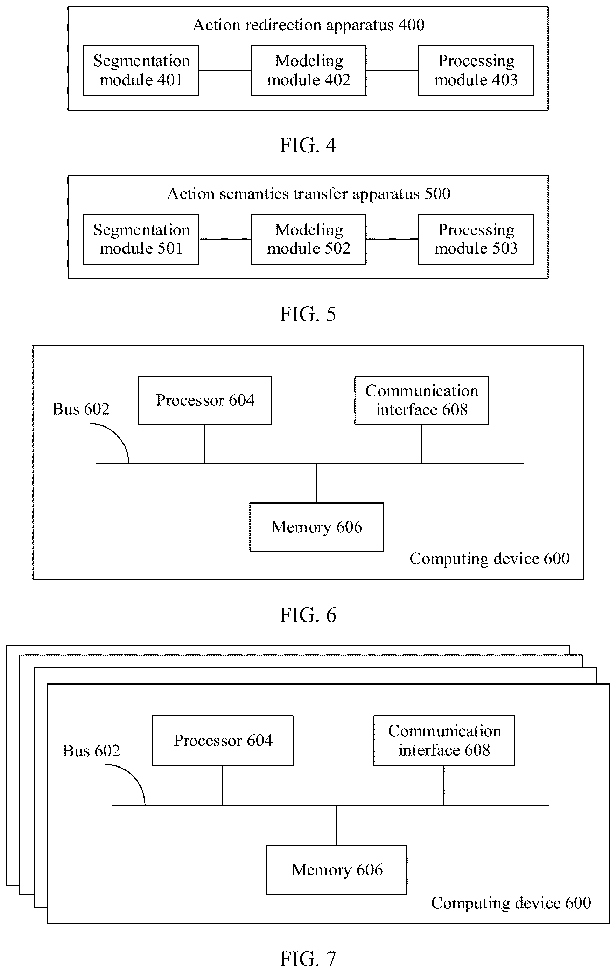

For example, FIG. 4 is a diagram of a structure of an action redirection apparatus according to an embodiment of this application. As shown in FIG. 4, the action redirection apparatus 400 includes a segmentation module 401, a modeling module 402, and a processing module 403. The segmentation module 401 is configured to segment a target character based on semantics of different parts of the target character, to obtain a plurality of first body segments related to the target character. The modeling module 402 is configured to model each first body segment based on a first coordinate system marked on the first body segment, to obtain a plurality of first geometric models, where one first geometric model represents a shape of one body segment. The processing module 403 is configured to: perform collision detection on the plurality of first geometric models, when the first geometric models collide with each other, adjust a distance between the first geometric models that collide with each other, and adjust an action sequence of the target character based on an adjusted distance, where the action sequence of the target character is obtained by transferring an action sequence of a source character.

In some embodiments, when modeling each first body segment based on the first coordinate system marked on the first body segment, the modeling module 402 is specifically configured to: determine, based on the first coordinate system marked on the first body segment, a coordinate expression of a point on a surface of the first body segment in the first coordinate system, and train a to-be-trained model based on the coordinate expression, to obtain the first geometric model.

In some embodiments, when performing collision detection on the plurality of first geometric models, the processing module 403 is specifically configured to: for any two first geometric models, determine a minimum distance between the 1^{st} geometric model and the 2^{nd} geometric model, where the minimum distance is a distance between a first point inside the 1^{st} geometric model and a second point inside the 2^{nd} geometric model; input at least a part of a coordinate expression of the first point in a coordinate system associated with the 2^{nd} geometric model into the 2^{nd} geometric model, to obtain a first distance, and input at least a part of a coordinate expression of the second point in a coordinate system associated with the 1^{st} geometric model into the 1^{st} geometric model, to obtain a second distance; and when a sum of the first distance and the second distance is greater than the minimum distance, determine that the 1^{st} geometric model collides with the 2^{nd} geometric model.

In some embodiments, before the processing module 403 performs collision detection on the plurality of first geometric models, the segmentation module 401 is further configured to segment the source character based on semantics of different parts of the source character, to obtain a plurality of second body segments related to the source character; the modeling module 402 is further configured to model, based on the first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment; the processing module 403 is further configured to determine a location relationship between a second body part of the target character and each first body segment based on the plurality of mapping models and a location relationship between a first body part of the source character and each second body segment, where the first body part is the same as the second body part; the processing module 403 is further configured to determine a final location of the second body part in a world coordinate system based on the location relationship between the second body part of the target character and each first body segment; and the processing module 403 is further configured to adjust the action sequence of the target character based on the final location, so that the second body part is located at the final location.

In some embodiments, both the first coordinate system and the second coordinate system are cylindrical coordinate systems.

A first location relationship between the first body part and the second body segment includes: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part.

In this case, when determining the location relationship between the second body part of the target character and each first body segment based on the plurality of mapping models and the location relationship between the first body part of the source character and each second body segment, the processing module 403 is specifically configured to: input the first location into a mapping model related to the first location relationship, to obtain a second location of a second projection point that is of the second body part and that is on a central axis of the second coordinate system; input the second location, the first direction relationship, and the second direction relationship into a first geometric model of a first body segment related to the first location relationship, to obtain a second distance between the second projection point and the second body part; input the first location, the first direction relationship, and the second direction relationship into a second geometric model of the second body segment related to the first location relationship, to obtain a third distance between the first projection point and the first body part, where the second geometric model is obtained through modeling based on a coordinate system marked on the second body segment related to the first location relationship; and obtain a fourth distance based on the first distance, the second distance, and the third distance, where a second location relationship between the second body part and the first body segment related to the first location relationship includes the second location, the first direction relationship, the second direction relationship, and the fourth distance.

In some embodiments, both the first coordinate system and the second coordinate system are spherical coordinate systems.

A first location relationship between the first body part and the second body segment includes: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system.

In this case, when determining the location relationship between the second body part of the target character and each first body segment based on the plurality of mapping models and the location relationship between the first body part of the source character and each second body segment, the processing module 403 is specifically configured to: input the first relationship into a mapping model related to the first location relationship, to obtain a fourth relationship between a direction from the second body part to the origin of the first coordinate system and a direction of a z axis of the second coordinate system; input the fourth relationship, the second relationship, and the third relationship into a first geometric model of a first body segment related to the first location relationship, to obtain a second distance between the second body part and an origin of the second coordinate system; input the first relationship, the second relationship, and the third relationship into a second geometric model of the second body segment related to the first location relationship, to obtain a third distance between the first body part and the origin of the first coordinate system, where the second geometric model is obtained through modeling based on a coordinate system marked on the second body segment related to the first location relationship; and obtain a fourth distance based on the first distance, the second distance, and the third distance, where a second location relationship between the second body part and the first body segment related to the first location relationship includes the fourth relationship, the second relationship, the third relationship, and the fourth distance.

In some embodiments, the first body segment is associated with a first part of the target character, and the second body segment is associated with a second part of the source character. When the first part is the same as the second part, a type of the coordinate system marked on the first body segment is the same as a type of the coordinate system marked on the second body segment, and a type of the first key point marked on the first body segment is the same as a type of the second key point marked on the second body segment.

It should be understood that the foregoing apparatus is configured to perform the method in the foregoing embodiments. Implementation principles and technical effect of corresponding program modules in the apparatus are similar to those described in the foregoing method. For a working process of the apparatus, refer to the corresponding process in the foregoing method. Details are not described herein again.

For example, FIG. 5 is a diagram of a structure of an action semantics transfer apparatus according to an embodiment of this application. As shown in FIG. 5, the action semantics transfer apparatus 500 includes a segmentation module 501, a modeling module 502, and a processing module 503. The segmentation module 501 is configured to: segment a target character based on semantics of different parts of the target character, to obtain a plurality of first body segments related to the target character; and segment a source character based on semantics of different parts of the source character, to obtain a plurality of second body segments related to the source character. The modeling module 502 is configured to model, based on first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, where one mapping model is used to express a mapping relationship between one first body segment and one second body segment. The processing module 503 is configured to determine a location relationship between a second body part of the target character and each first body segment based on the plurality of mapping models and a location relationship between a first body part of the source character and each second body segment, where the first body part is the same as the second body part. The processing module 503 is further configured to: determine a final location of the second body part in a world coordinate system based on the location relationship between the second body part of the target character and each first body segment, and adjust an action sequence of the target character based on the final location, so that the second body part is located at the final location, where the action sequence of the target character is obtained by transferring an action sequence of the source character.

It should be understood that the foregoing apparatus is configured to perform the method in the foregoing embodiments. Implementation principles and technical effect of corresponding program modules in the apparatus are similar to those described in the foregoing method. For a working process of the apparatus, refer to the corresponding process in the foregoing method. Details are not described herein again.

An embodiment of this application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that quantities of processors and memories in the computing device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 6, but this does not mean that there is only one bus or only one type of bus. The bus 604 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 604 may further include a non-volatile memory (non-volatile memory), for example, a read-only memory (read-only memory, ROM), a flash memory, a hard disk drive (hard disk drive, HDD), or a solid state drive (solid state drive, SSD).

The memory 606 stores executable code, and the processor 604 executes the executable code to implement functions of the action redirection apparatus or the action semantics transfer apparatus, and further implement the action redirection method or the action semantics transfer method described in the foregoing embodiments. In other words, the memory 606 stores instructions used to perform the action redirection method or the action semantics transfer method described in the foregoing embodiments.

The communication interface 603 uses a transceiver module, for example, but not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 7, the computing device cluster includes at least one computing device 600. Memories 606 in the one or more computing devices 600 in the computing device cluster may store same instructions used to perform the action redirection method or the action semantics transfer method described in the foregoing embodiments.

In some possible implementations, memories 606 in the one or more computing devices 600 in the computing device cluster may alternatively separately store some instructions used to perform the action redirection method described in the foregoing embodiment. In other words, a combination of the one or more computing devices 600 may jointly execute instructions used to perform the action redirection method described in the foregoing embodiment. Alternatively, memories 606 in the one or more computing devices 600 in the computing device cluster may alternatively separately store some instructions used to perform the action semantics transfer method described in the foregoing embodiment. In other words, a combination of the one or more computing devices 600 may jointly execute instructions used to perform the action semantics transfer method described in the foregoing embodiment.

It should be noted that memories 606 in different computing devices 600 in the computing device cluster may store different instructions that are separately used to perform some functions of the action redirection apparatus or are separately used to perform some functions of the action semantics transfer apparatus.

In some possible implementations, the one or more computing devices in the computing device cluster may be connected through a network. The network may be a wide area network, a local area network, or the like.

An embodiment of this application further provides another computing device cluster. For a connection relationship between computing devices in the computing device cluster, similarly refer to the connection manner of the computing device cluster in FIG. 7. A difference lies in that memories 606 in one or more computing devices 600 in the computing device cluster may store same instructions used to perform the methods in the foregoing embodiments.

In some possible implementations, memories 606 in one or more computing devices 600 in the computing device cluster may alternatively separately store some instructions used to perform the action redirection method in the foregoing embodiment. In other words, a combination of the one or more computing devices 600 may jointly execute instructions used to perform the action redirection method in the foregoing embodiment. Alternatively, memories 606 in one or more computing devices 600 in the computing device cluster may alternatively separately store some instructions used to perform the action semantics transfer method in the foregoing embodiment. In other words, a combination of the one or more computing devices 600 may jointly execute instructions used to perform the action semantics transfer method in the foregoing embodiment.

According to the methods in the foregoing embodiments, an embodiment of this application provides a computer-readable storage medium. The computer-readable storage medium stores a computer program. When the computer program is run on a computing device cluster including at least one computing device, the computing device cluster is caused to perform the methods described in the foregoing embodiments. For example, the computer-readable storage medium may be any usable medium that can be stored by the computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like.

According to the methods in the foregoing embodiments, an embodiment of this application provides a computer program product including instructions. When the computer program product runs on a computing device cluster including at least one computing device, the computing device cluster is caused to perform the methods in the foregoing embodiments.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instruction may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in the ASIC.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. An action redirection method, comprising:
segmenting a target character based on semantics of different parts of the target character, to obtain a plurality of first body segments related to the target character;
modeling each first body segment based on a first coordinate system marked on the first body segment, to obtain a plurality of first geometric models, wherein one first geometric model represents a shape of one body segment;
performing collision detection on the plurality of first geometric models; and
when the first geometric models collide with each other, adjusting a distance between the first geometric models that collide with each other, and adjusting an action sequence of the target character based on an adjusted distance, wherein the action sequence of the target character is obtained by transferring an action sequence of a source character.

2. The method according to claim 1, wherein modeling each first body segment based on the first coordinate system marked on the first body segment comprises:
determining, based on the first coordinate system marked on the first body segment, a coordinate expression of a point on a surface of the first body segment in the first coordinate system; and
training a to-be-trained model based on the coordinate expression, to obtain the first geometric model.

3. The method according to claim 1 or 2, wherein performing collision detection on the plurality of first geometric models comprises:
for any two first geometric models, determining a minimum distance between the 1^{st} geometric model and the 2^{nd} geometric model, wherein the minimum distance is a distance between a first point inside the 1^{st} geometric model and a second point inside the 2^{nd} geometric model;
inputting at least a part of a coordinate expression of the first point in a coordinate system associated with the 2^{nd} geometric model into the 2^{nd} geometric model, to obtain a first distance, and inputting at least a part of a coordinate expression of the second point in a coordinate system associated with the 1^{st} geometric model into the 1^{st} geometric model, to obtain a second distance; and
when a sum of the first distance and the second distance is greater than the minimum distance, determining that the 1^{st} geometric model collides with the 2^{nd} geometric model.

4. The method according to any one of claims 1 to 3, wherein before performing collision detection on the plurality of first geometric models, the method further comprises:
segmenting the source character based on semantics of different parts of the source character, to obtain a plurality of second body segments related to the source character;
modeling, based on the first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, wherein one mapping model is used to express a mapping relationship between one first body segment and one second body segment;
determining a location relationship between a second body part of the target character and each first body segment based on the plurality of mapping models and a location relationship between a first body part of the source character and each second body segment, wherein the first body part is the same as the second body part;
determining a final location of the second body part in a world coordinate system based on the location relationship between the second body part of the target character and each first body segment; and
adjusting the action sequence of the target character based on the final location, so that the second body part is located at the final location.

5. The method according to claim 4, wherein both the first coordinate system and the second coordinate system are cylindrical coordinate systems;
a first location relationship between the first body part and the second body segment comprises: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part; and
determining the location relationship between the second body part of the target character and each first body segment based on the plurality of mapping models and the location relationship between the first body part of the source character and each second body segment comprises:
inputting the first location into a mapping model related to the first location relationship, to obtain a second location of a second projection point that is of the second body part and that is on a central axis of the second coordinate system;
inputting the second location, the first direction relationship, and the second direction relationship into a first geometric model of a first body segment related to the first location relationship, to obtain a second distance between the second projection point and the second body part;
inputting the first location, the first direction relationship, and the second direction relationship into a second geometric model of the second body segment related to the first location relationship, to obtain a third distance between the first projection point and the first body part, wherein the second geometric model is obtained through modeling based on a coordinate system marked on the second body segment related to the first location relationship; and
obtaining a fourth distance based on the first distance, the second distance, and the third distance, wherein
a second location relationship between the second body part and the first body segment related to the first location relationship comprises the second location, the first direction relationship, the second direction relationship, and the fourth distance.

6. The method according to claim 4, wherein both the first coordinate system and the second coordinate system are spherical coordinate systems;
a first location relationship between the first body part and the second body segment comprises: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system; and
determining the location relationship between the second body part of the target character and each first body segment based on the plurality of mapping models and the location relationship between the first body part of the source character and each second body segment comprises:
inputting the first relationship into a mapping model related to the first location relationship, to obtain a fourth relationship between a direction from the second body part to the origin of the first coordinate system and a direction of a z axis of the second coordinate system;
inputting the fourth relationship, the second relationship, and the third relationship into a first geometric model of a first body segment related to the first location relationship, to obtain a second distance between the second body part and an origin of the second coordinate system;
inputting the first relationship, the second relationship, and the third relationship into a second geometric model of the second body segment related to the first location relationship, to obtain a third distance between the first body part and the origin of the first coordinate system, wherein the second geometric model is obtained through modeling based on a coordinate system marked on the second body segment related to the first location relationship; and
obtaining a fourth distance based on the first distance, the second distance, and the third distance, wherein
a second location relationship between the second body part and the first body segment related to the first location relationship comprises the fourth relationship, the second relationship, the third relationship, and the fourth distance.

7. The method according to any one of claims 4 to 6, wherein the first body segment is associated with a first part of the target character, and the second body segment is associated with a second part of the source character; and
when the first part is the same as the second part, a type of the coordinate system marked on the first body segment is the same as a type of the coordinate system marked on the second body segment, and a type of the first key point marked on the first body segment is the same as a type of the second key point marked on the second body segment.

8. An action semantics transfer method, comprising:
segmenting a target character based on semantics of different parts of the target character, to obtain a plurality of first body segments related to the target character;
segmenting a source character based on semantics of different parts of the source character, to obtain a plurality of second body segments related to the source character;
modeling, based on first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, wherein one mapping model is used to express a mapping relationship between one first body segment and one second body segment;
determining a location relationship between a second body part of the target character and each first body segment based on the plurality of mapping models and a location relationship between a first body part of the source character and each second body segment, wherein the first body part is the same as the second body part;
determining a final location of the second body part in a world coordinate system based on the location relationship between the second body part of the target character and each first body segment; and
adjusting an action sequence of the target character based on the final location, so that the second body part is located at the final location, wherein the action sequence of the target character is obtained by transferring an action sequence of the source character.

9. An action redirection apparatus, comprising:
a segmentation module, configured to segment a target character based on semantics of different parts of the target character, to obtain a plurality of first body segments related to the target character;
a modeling module, configured to model each first body segment based on a first coordinate system marked on the first body segment, to obtain a plurality of first geometric models, wherein one first geometric model represents a shape of one body segment; and
a processing module, configured to perform collision detection on the plurality of first geometric models, wherein
the processing module is configured to: when the first geometric models collide with each other, adjust a distance between the first geometric models that collide with each other, and adjust an action sequence of the target character based on an adjusted distance, wherein the action sequence of the target character is obtained by transferring an action sequence of a source character.

10. The apparatus according to claim 9, wherein when modeling each first body segment based on the first coordinate system marked on the first body segment, the modeling module is specifically configured to:
determine, based on the first coordinate system marked on the first body segment, a coordinate expression of a point on a surface of the first body segment in the first coordinate system; and
train a to-be-trained model based on the coordinate expression, to obtain the first geometric model.

11. The apparatus according to claim 9 or 10, wherein when performing collision detection on the plurality of first geometric models, the processing module is specifically configured to:
for any two first geometric models, determine a minimum distance between the 1^{st} geometric model and the 2^{nd} geometric model, wherein the minimum distance is a distance between a first point inside the 1^{st} geometric model and a second point inside the 2^{nd} geometric model;
input at least a part of a coordinate expression of the first point in a coordinate system associated with the 2^{nd} geometric model into the 2^{nd} geometric model, to obtain a first distance, and input at least a part of a coordinate expression of the second point in a coordinate system associated with the 1^{st} geometric model into the 1^{st} geometric model, to obtain a second distance; and
when a sum of the first distance and the second distance is greater than the minimum distance, determine that the 1^{st} geometric model collides with the 2^{nd} geometric model.

12. The apparatus according to any one of claims 9 to 11, wherein before the processing module performs collision detection on the plurality of first geometric models,
the segmentation module is further configured to segment the source character based on semantics of different parts of the source character, to obtain a plurality of second body segments related to the source character;
the modeling module is further configured to model, based on the first coordinate systems and first key points that are marked on all the first body segment and second coordinate systems and second key points that are marked on all the second body segments, mapping relationships between the first body segments and the second body segments that are associated with same parts of the target character and the source character, to obtain a plurality of mapping models, wherein one mapping model is used to express a mapping relationship between one first body segment and one second body segment;
the processing module is further configured to determine a location relationship between a second body part of the target character and each first body segment based on the plurality of mapping models and a location relationship between a first body part of the source character and each second body segment, wherein the first body part is the same as the second body part;
the processing module is further configured to determine a final location of the second body part in a world coordinate system based on the location relationship between the second body part of the target character and each first body segment; and
the processing module is further configured to adjust the action sequence of the target character based on the final location, so that the second body part is located at the final location.

13. The apparatus according to claim 12, wherein both the first coordinate system and the second coordinate system are cylindrical coordinate systems;
a first location relationship between the first body part and the second body segment comprises: a first location of a first projection point that is of the first body part and that is on a central axis of the first coordinate system, a first direction relationship between a direction from the first projection point to the first body part and an axis except for the central axis, a second direction relationship between the direction from the first projection point to the first body part and another axis except for the central axis, and a first distance between the first projection point and the first body part; and
when determining the location relationship between the second body part of the target character and each first body segment based on the plurality of mapping models and the location relationship between the first body part of the source character and each second body segment, the processing module is specifically configured to:
input the first location into a mapping model related to the first location relationship, to obtain a second location of a second projection point that is of the second body part and that is on a central axis of the second coordinate system;
input the second location, the first direction relationship, and the second direction relationship into a first geometric model of a first body segment related to the first location relationship, to obtain a second distance between the second projection point and the second body part;
input the first location, the first direction relationship, and the second direction relationship into a second geometric model of the second body segment related to the first location relationship, to obtain a third distance between the first projection point and the first body part, wherein the second geometric model is obtained through modeling based on a coordinate system marked on the second body segment related to the first location relationship; and
obtain a fourth distance based on the first distance, the second distance, and the third distance, wherein
a second location relationship between the second body part and the first body segment related to the first location relationship comprises the second location, the first direction relationship, the second direction relationship, and the fourth distance.

14. The apparatus according to claim 12, wherein both the first coordinate system and the second coordinate system are spherical coordinate systems;
a first location relationship between the first body part and the second body segment comprises: a first relationship between a direction from the first body part to an origin of the first coordinate system and a direction of a z axis of the first coordinate system, a second relationship between the direction from the first body part to the origin of the first coordinate system and a direction of an x axis of the first coordinate system, a third relationship between the direction from the first body part to the origin of the first coordinate system and a direction of a y axis of the first coordinate system, and a first distance from the first body part to the origin of the first coordinate system; and
when determining the location relationship between the second body part of the target character and each first body segment based on the plurality of mapping models and the location relationship between the first body part of the source character and each second body segment, the processing module is specifically configured to:
input the first relationship into a mapping model related to the first location relationship, to obtain a fourth relationship between a direction from the second body part to the origin of the first coordinate system and a direction of a z axis of the second coordinate system;
input the fourth relationship, the second relationship, and the third relationship into a first geometric model of a first body segment related to the first location relationship, to obtain a second distance between the second body part and an origin of the second coordinate system;
input the first relationship, the second relationship, and the third relationship into a second geometric model of the second body segment related to the first location relationship, to obtain a third distance between the first body part and the origin of the first coordinate system, wherein the second geometric model is obtained through modeling based on a coordinate system marked on the second body segment related to the first location relationship; and
obtain a fourth distance based on the first distance, the second distance, and the third distance, wherein
a second location relationship between the second body part and the first body segment related to the first location relationship comprises the fourth relationship, the second relationship, the third relationship, and the fourth distance.

15. The apparatus according to any one of claims 12 to 14, wherein the first body segment is associated with a first part of the target character, and the second body segment is associated with a second part of the source character; and
when the first part is the same as the second part, a type of the coordinate system marked on the first body segment is the same as a type of the coordinate system marked on the second body segment, and a type of the first key point marked on the first body segment is the same as a type of the second key point marked on the second body segment.

16. An action semantics transfer apparatus, comprising:
a segmentation module, configured to: segment a target character based on semantics of different parts of the target character, to obtain a plurality of first body segments related to the target character; and segment a source character based on semantics of different parts of the source character, to obtain a plurality of second body segments related to the source character;
a modeling module, configured to model, based on first coordinate systems and first key points that are marked on all the first body segments and second coordinate systems and second key points that are marked on all the second body segments, mapping relationships between the first body segments and the second body segments that are associated with same parts of the target character and the source character, to obtain a plurality of mapping models, wherein one mapping model is used to express a mapping relationship between one first body segment and one second body segment; and
a processing module, configured to determine a location relationship between a second body part of the target character and each first body segment based on the plurality of mapping models and a location relationship between a first body part of the source character and each second body segment, wherein the first body part is the same as the second body part;
the processing module is further configured to determine a final location of the second body part in a world coordinate system based on the location relationship between the second body part of the target character and each first body segment; and
the processing module is further configured to adjust an action sequence of the target character based on the final location, so that the second body part is located at the final location, wherein the action sequence of the target character is obtained by transferring an action sequence of the source character.

17. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 7, or performs the method according to claim 8.

18. A computer-readable storage medium, wherein the computer-readable storage medium stores a computer program, and when the computer program is run on a computing device cluster comprising at least one computing device, the computing device cluster is caused to perform the method according to any one of claims 1 to 7, or perform the method according to claim 8.

19. A computer program product, wherein when the computer program product runs on a computing device cluster comprising at least one computing device, the computing device cluster is caused to perform the method according to any one of claims 1 to 7, or perform the method according to claim 8.
